# EUROPEAN PATENT APPLICATION

(11) **EP 4 560 890 A1**
(43) Date of publication of application: **28.05.2025**
(21) Application number: 23943199.2
(22) Date of filing: 26.09.2023
(51) Int. Cl.: H02K 1/32, H02K 1/28

(54) **ROTOR ASSEMBLY, ELECTRIC MOTOR, AND NEW ENERGY VEHICLE**

(30) Priority: 25.06.2023 CN 202310751427
(71) Applicant: Deepal Automobile Technology Co., Ltd., Chongqing 401133 (CN)
(72) Inventor: HE, Wei, Chongqing 401135 (CN); BAI, Yang, Chongqing 401135 (CN); LU, Youjun, Chongqing 401135 (CN); WANG, Xuedong, Chongqing 401135 (CN); TANG, Linghong, Chongqing 401135 (CN)
(74) Representative: 2K Patentanwälte Blasberg Kewitz & Reichel
(86) International application number: PCT/CN2023/121337
(87) International publication number: WO 2025/000720

(57) **Abstract**

Provided in the present invention are a rotor assembly, an electric motor, and a new energy vehicle. The rotor assembly comprises: a rotor core, a first rotor end plate, a second rotor end plate, and an electric motor rotating shaft, wherein the rotor core is coaxially fixed to the electric motor rotating shaft, and the first rotor end plate and the second rotor end plate are respectively fixed to two ends of the rotor core and are coaxially fixed with the electric motor rotating shaft. The rotor core is provided first ventilation holes distributed in axial symmetry, the first ventilation holes being distributed on a first reference circle with a first diameter, and the first rotor end plate and the second rotor end plate are respectively provided with second ventilation holes and third ventilation holes distributed in axial symmetry, the second ventilation holes being distributed on a second reference circle with a second diameter, and the third ventilation holes being distributed on a third reference circle with a third diameter; stepped ventilation channels distributed in axial symmetry are formed by the first ventilation holes, the second ventilation holes, and the third ventilation holes. In the present invention, the operating temperature of the rotor assembly can be effectively reduced by means of the stepped ventilation channels, and the rotor end plates have a simple structure, enabling the manufacturing cost to be reduced.

## Description

### TECHNICAL FIELD

The present invention relates to the field of motor technologies, and in particular, to a rotor assembly, an electric motor, and a new energy vehicle.

### BACKGROUND

A drive motor is one of core components of an electric drive assembly in a new energy vehicle, and includes a housing, a stator core, a rotor core, a winding, a permanent magnet, a rotating shaft, a rotor end plate, a pressure ring, and the like. In a running process of the motor, an iron loss is caused because the stator core and the rotor core are located in an alternating magnetic field, and a copper loss may be caused after the winding is energized. In addition, a magnetic hysteresis loss and an eddy current loss are caused on the stator core, the rotor core, and the permanent magnet. These losses cause an excessively high temperature rise of the running motor, thereby accelerating aging of the motor and affecting safety of a function of the motor. Therefore, how to effectively reduce excessively high operating temperature of the motor is a problem to be resolved.

Currently, a drive motor is mainly cooled in a water cooling manner, an oil cooling manner, or an air cooling manner, and auxiliary cooling is further performed on the rotor by changing a structure of the rotor assembly. Chinese patent CN112636501B discloses a motor rotor and a motor. A first balancing plate and a second balancing plate of the motor rotor are respectively fastened to both ends of a rotor core, and are disposed coaxially with the rotor core. The first balancing plate has a plurality of first weight reduction holes, the second balancing plate has a plurality of second weight reduction holes, and the rotor core has a plurality of third weight reduction holes. The third weight reduction holes are in communication with the first weight reduction holes and/or the second weight reduction holes to form a stepped cooling passage. However, the balancing plates of the motor rotor cannot axially fasten magnetic steel in the rotor core. In addition, because the balancing plates are relatively small, when a rotor assembly cannot reach dynamic balance due to tolerance, it is difficult to dispose a balancing hole on the balancing plate, which is not conducive to dynamic balance of the motor rotor. Chinese patent application CN113809855A discloses a rotor structure with a plurality of differential pressure generating components, including a rotating shaft, a rotor body, a first differential pressure generating component including a plurality of first differential pressure generating blocks, and a second differential pressure generating component including a plurality of second differential pressure generating blocks. A first average width of the first differential pressure generating blocks changes in a first trend in an extension direction, and a second average width of the second differential pressure generating blocks changes in a second trend in the extension direction. The first differential pressure generating blocks generate at least two first airflows, and the at least two first airflows flow from the first differential pressure generating component to the second differential pressure generating component. The second differential pressure generating blocks generate at least one second airflow, and the at least one second airflow flows from the second differential pressure generating component to the first differential pressure generating component. In this way, an effect of heat dissipation and cooling through bidirectional circulation of an airflow is achieved. The differential pressure generating component in this method is equivalent to a rotor end plate, but a structure of this differential pressure generating component is relatively complex, resulting in an increase in manufacturing costs of the rotor end plate.

Therefore, it is necessary to propose a rotor assembly that can effectively reduce operating temperature of the rotor assembly and has a rotor end plate of a simple structure.

### SUMMARY

A first objective of the present invention is to provide a rotor assembly, to resolve technical problems in a conventional technology that a rotor assembly cannot be effectively cooled due to excessively high temperature during rotation and that a structure of a rotor end plate is complex. A second objective is to provide a motor. A third objective is to provide a new energy vehicle.

To achieve the foregoing objectives, the following technical solutions are used in the present invention.

According to a first aspect, the present invention provides a rotor assembly, and the rotor assembly includes a rotor core, a first rotor end plate, a second rotor end plate, and a motor shaft. The rotor core is coaxially fastened to the motor shaft, and the first rotor end plate and the second rotor end plate are respectively fastened to both ends of the rotor core, and are coaxially fastened to the motor shaft. First air holes in axisymmetric distribution are disposed on the rotor core, and the first air holes are distributed on a first pitch circle of a first diameter. Second air holes in axisymmetric distribution and third air holes in axisymmetric distribution are disposed on the first rotor end plate and the second rotor end plate, the second air holes are distributed on a second pitch circle of a second diameter, and the third air holes are distributed on a third pitch circle of a third diameter. The second diameter is greater than the first diameter, the first diameter is greater than the third diameter, and stepped air ducts in axisymmetric distribution are formed by the first air holes, the second air holes, and the third air holes. In an embodiment of the present invention, a second radial center line of the second air hole on the first rotor end plate coincides with a first radial center line of the first air hole, and a third radial center line of the third air hole on the second rotor end plate coincides with the first radial center line.

In an embodiment of the present invention, the second air hole on the first rotor end plate is offset outwardly from the motor shaft to block the first air hole, the third air hole on the first rotor end plate is offset inwardly toward the motor shaft to block the first air hole, the second air hole on the second rotor end plate is offset outwardly from the motor shaft to partially block the first air hole, and the third air hole on the second rotor end plate is offset inwardly toward the motor shaft to partially block the first air hole.

In an embodiment of the present invention, the stepped air duct includes a first air duct and a second air duct, and an airflow direction of the first air duct is opposite to an airflow direction of the second air duct.

In an embodiment of the present invention, the rotor assembly further includes a fastener configured to fasten the rotor core and the rotor end plate to the motor shaft, and the fastener neither intersects with nor overlaps the third air hole.

In an embodiment of the present invention, the fastener includes a first fastener that fastens the rotor core and the first rotor end plate to the motor shaft, and a second fastener that fastens the rotor core and the second rotor end plate to the motor shaft, and the first fastener and the second fastener are in interference fit with the motor shaft.

In an embodiment of the present invention, one end of the motor shaft is a spline end and the other end thereof is a resolver end, a limiting member that fastens the rotor core and the second rotor end plate to the motor shaft is disposed on the spline end, the fastener fastens, on the spline end, the rotor core and the first rotor end plate to the motor shaft, the fastener is in interference fit with the motor shaft, and the limiting member neither intersects with nor overlaps the third air hole.

In an embodiment of the present invention, a first shaft hole is further disposed on the rotor core, second shaft holes are further disposed on the first rotor end plate and the second rotor end plate, the rotor core is fastened to the motor shaft through the first shaft hole, and the first rotor end plate and the second rotor end plate are coaxially fastened to both ends of the rotor core through the second shaft holes and the motor shaft, respectively.

In an embodiment of the present invention, the first shaft hole is in interference fit with the motor shaft, and the second shaft hole is in transition fit with the motor shaft.

In an embodiment of the present invention, a fourth diameter of an outer contour of the rotor core is equal to a fifth diameter of an outer contour of the rotor end plate.

In an embodiment of the present invention, the second air holes and the third air holes are alternately and uniformly distributed on the first rotor end plate and the second rotor end plate.

According to a second aspect, the present invention further provides a motor, including the rotor assembly according to the first aspect.

In an embodiment of the present invention, the motor is cooled in a water cooling manner, an oil cooling manner, or an air cooling manner.

According to a third aspect, the present invention further provides a new energy vehicle, including the rotor assembly according to the first aspect, or including the motor according to the second aspect.

Beneficial effects of the present invention are as follows.

The rotor core is coaxially fastened to the motor shaft, and the first rotor end plate and the second rotor end plate are respectively fastened to both ends of the rotor core, and are coaxially fastened to the motor shaft. The stepped air ducts are formed by the second air holes and the third air holes on the first rotor end plate, the first air holes on the rotor core, and the second air holes and the third air holes on the second rotor end plate. Differential pressure is generated when the rotor assembly rotates, so that an airflow path can be formed in the duct, and therefore, self-circulation cooling for the rotor assembly is implemented, and a cooling effect is achieved. In addition, stepped air ducts with a plurality of steps in different directions are formed by two types of air holes disposed on the first rotor end plate and the second rotor end plate, so that when the rotor assembly rotates, air flows on the left and right sides inside the rotor assembly, and the cooling effect is enhanced. In addition, the first rotor end plate and the second rotor end plate are fastened to the motor shaft and both ends of the rotor core at the same time, so that not only magnetic steel in the rotor core can be fastened, but also the first rotor end plate and the second rotor end plate are of simple structures, and therefore, manufacturing costs of the rotor end plates can be reduced.

### BRIEF DESCRIPTION OF DRAWINGS

FIG. 1 is a cross-sectional view of a rotor assembly according to an example embodiment of the present invention;
FIG. 2 is a schematic diagram of a shaft side of a rotor assembly according to an example embodiment of the present invention;
FIG. 3 is a schematic diagram of another shaft side of a rotor assembly according to an example embodiment of the present invention;
FIG. 4 is a schematic diagram of a shaft side of a rotor core according to an example embodiment of the present invention;
FIG. 5 is a schematic diagram of a first pitch circle according to an example embodiment of the present invention;
FIG. 6 is a schematic diagram of a shaft side of a first rotor end plate according to an example embodiment of the present invention;
FIG. 7 is a schematic diagram of a second pitch circle and a third pitch circle according to an example embodiment of this application;
FIG. 8 is a schematic diagram of a first radial center line according to an example embodiment of the present invention;
FIG. 9 is a schematic diagram of a second radial center line and a third radial center line according to an example embodiment of this application;
FIG. 10 is a left view of a rotor assembly according to an example embodiment of the present invention;
FIG. 11 is a right view of a rotor assembly according to an example embodiment of this application;
FIG. 12 is a cross-sectional view of another rotor assembly according to an example embodiment of the present invention;
FIG. 13 is a simulation diagram of air entering and exiting a first air hole on one end of a rotor core according to an example embodiment of this application; and
FIG. 14 is a simulation diagram of airflows in a stepped air duct according to an example embodiment of the present invention.

1 - Rotor core; 11 - First air hole; 12 - First shaft hole; 2 - First rotor end plate; 21 - First air hole; 22 - Second air hole; 23 - Second shaft hole; 3 - Second rotor end plate; 4 - Motor shaft; 41 - Limiting member; 5 - Stepped air duct; 6 - Fastener.

### DESCRIPTION OF EMBODIMENTS

The following describes implementations of the present invention by using specific instances. A person skilled in the art may easily know other advantages and effects of the present invention based on content disclosed in this specification. The present invention may be further implemented or applied by using other different specific implementations. Various details in this specification may also be modified or altered based on different viewpoints and applications without departing from the essence of the present invention. It should be noted that the following embodiments and features in the embodiments may be mutually combined when there are no conflicts. It should be further understood that terms used in the embodiments of the present invention are used to describe specific implementation solutions, and are not used to limit the protection scope of the present invention. In the following embodiments, test methods not marked with specific conditions are usually performed based on conventional conditions or based on conditions recommended by manufacturers.

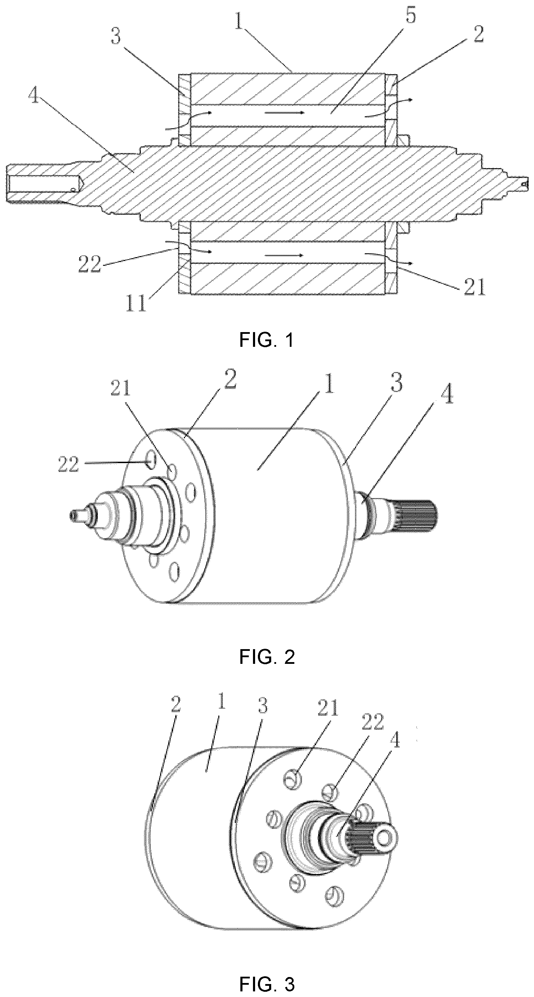

Refer to FIG. 1 to FIG. 14. It should be noted that the structure, scale, size, and the like depicted in the accompanying drawings of this specification are merely used to cooperate with the content disclosed in this specification for understanding and reading by a person skilled in the art, and are not used to limit restrictive conditions for implementation of the present invention, and therefore have no technically substantial significance. Any modification of the structure, change of a proportional relationship, or adjustment of the size shall still fall within the scope that can be covered by the technical content disclosed in the present invention, provided that they do not affect the effects that can be generated by the present invention and the purpose that can be achieved by the present invention. In addition, terms such as "upper", "lower", "left", "right", "middle", and "one" that are referred to in this specification are merely used for ease of description, and are not intended to limit the scope of implementation of the present invention. A change or an adjustment of a relative relationship thereof also falls within the scope of implementation of the present invention on the premise that the technical content is not substantially changed.

When a value range is provided in an embodiment, it should be understood that unless otherwise stated in the present invention, two endpoints of each value range and any value between the two endpoints each can be selected. Unless otherwise defined, all technical and scientific terms used in the present invention are consistent with mastery of the conventional technology by a person skilled in the art and the descriptions of the present invention, and the present invention may be further implemented by using any method, device, or material in the conventional technology that is similar or equivalent to a method, device, or material described in the embodiments of the present invention.

A drive motor is one of core components of an electric drive assembly in a new energy vehicle, and includes a housing, a stator core, a rotor core, a winding, a permanent magnet, a rotating shaft, a rotor end plate, a pressure ring, and the like. In a running process of the motor, an iron loss is caused because the stator core and the rotor core are located in an alternating magnetic field, and a copper loss may be caused after the winding is energized. In addition, a magnetic hysteresis loss and an eddy current loss are caused on the stator core, the rotor core, and the permanent magnet. These losses cause an excessively high temperature rise of the running motor, thereby accelerating aging of the motor and affecting safety of a function of the motor. Therefore, how to effectively reduce excessively high operating temperature of the motor is a problem to be resolved. Currently, a drive motor is mainly cooled in a water cooling manner, an oil cooling manner, or an air cooling manner, and auxiliary cooling is further performed on the rotor by changing a structure of the rotor assembly. It is found by the inventor through research that, in some cases, a first balancing plate and a second balancing plate of a motor rotor are respectively fastened to both ends of a rotor core, and are coaxially disposed with the rotor core, the first balancing plate has a plurality of first weight reduction holes, the second balancing plate has a plurality of second weight reduction holes, the rotor core has a plurality of third weight reduction holes, and the third weight reduction holes are in communication with the first weight reduction holes and/or the second weight reduction holes to form a stepped cooling passage. However, the balancing plates of the motor rotor cannot axially fasten magnetic steel in the rotor core. In addition, because the balancing plates are relatively small, when a rotor assembly cannot reach dynamic balance due to tolerance, it is difficult to dispose a balancing hole on the balancing plate, which is not conducive to dynamic balance of the motor rotor. Some rotor assemblies have a first differential pressure generating component including a plurality of first differential pressure generating blocks, and a second differential pressure generating component including a plurality of second differential pressure generating blocks. A first average width of the first differential pressure generating blocks changes in a first trend in an extension direction, and a second average width of the second differential pressure generating blocks changes in a second trend in the extension direction. The first differential pressure generating blocks generate at least two first airflows, and the at least two first airflows flow from the first differential pressure generating component to the second differential pressure generating component. The second differential pressure generating blocks generate at least one second airflow, and the at least one second airflow flows from the second differential pressure generating component to the first differential pressure generating component. In this way, an effect of heat dissipation and cooling through bidirectional circulation of an airflow is achieved. The differential pressure generating component in this method is equivalent to a rotor end plate, but a structure of the differential pressure generating component is relatively complex, resulting in an increase in manufacturing costs. Therefore, it is necessary to propose a rotor assembly that can effectively reduce operating temperature of the rotor assembly and has a rotor end plate of a simple structure.

It should be noted that in a rotor assembly provided in the present invention, there are a plurality of first air holes, a plurality of second air holes, and a plurality of third air holes, and a quantity of first air holes, a quantity of second air holes, and a quantity of third air holes are even numbers. In addition, the quantity of second air holes is the same as the quantity of third air holes, and a sum of the quantity of second air holes and the quantity of third air holes is the same as the quantity of first air holes. In the following accompanying drawings, for example, the quantity of first air holes is 8, and the quantity of second air holes and the quantity of third air holes are 4. However, the quantity of first air holes is not limited to 8, and the quantity of second air holes and the quantity of third air holes are not limited to 4.

Referring to FIG. 1, the present invention provides a rotor assembly. FIG. 1 is a cross-sectional view of a rotor assembly according to an example embodiment of the present invention. As shown in FIG. 1, the rotor assembly includes at least a rotor core 1, a first rotor end plate 2, a second rotor end plate 3, and a motor shaft 4. The rotor core 1 is coaxially fastened to the motor shaft 4, and the first rotor end plate 2 and the second rotor end plate 3 are respectively fastened to both ends of the rotor core 1, and are coaxially fastened to the motor shaft 4. A stepped air duct 5 in axisymmetric distribution is formed by first air holes 11, second air holes 21, and third air holes 31.

Refer to FIG. 2 and FIG. 3. FIG. 2 is a schematic diagram of a shaft side of a rotor assembly according to an example embodiment of the present invention. FIG. 3 is a schematic diagram of another shaft side of a rotor assembly according to an example embodiment of the present invention. As shown in FIG. 2 and FIG. 3, the rotor assembly includes at least a rotor core 1, a first rotor end plate 2, a second rotor end plate 3, and a motor shaft 4. The rotor core 1 is coaxially fastened to the motor shaft 4, and the first rotor end plate 2 and the second rotor end plate 3 are respectively fastened to both ends of the rotor core 1, and are coaxially fastened to the motor shaft 4.

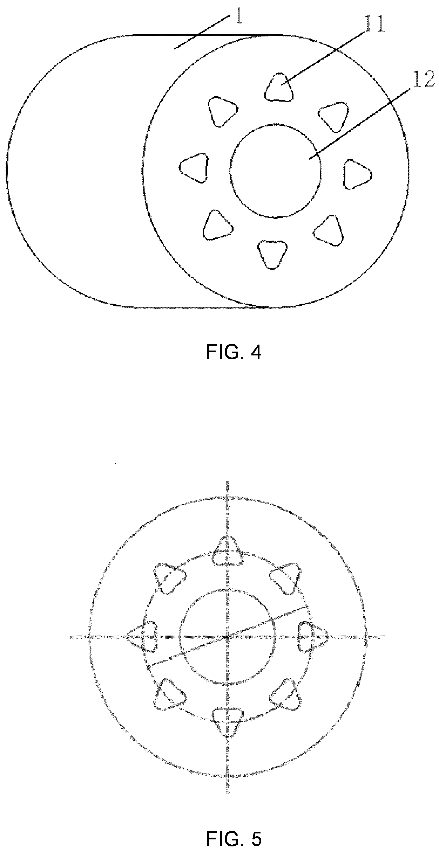

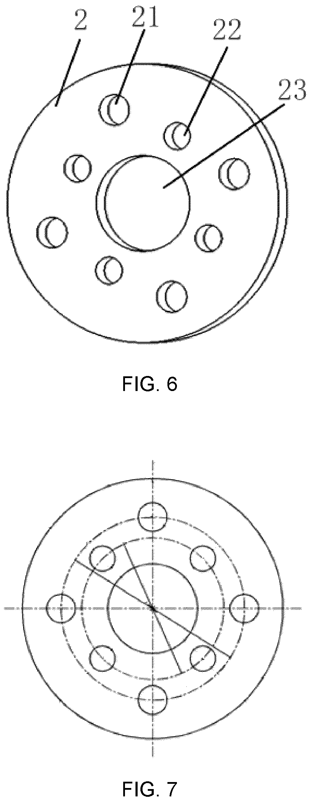

Refer to FIG. 4 to FIG. 7. FIG. 4 is a schematic diagram of a shaft side of a rotor core according to an example embodiment of the present invention. FIG. 5 is a schematic diagram of a first pitch circle according to an example embodiment of the present invention. FIG. 6 is a schematic diagram of a shaft side of a first rotor end plate according to an example embodiment of the present invention. FIG. 7 is a schematic diagram of a second pitch circle and a third pitch circle according to an example embodiment of this application. As shown in FIG. 4, first air holes 11 in axisymmetric distribution are disposed on the rotor core 1, and the first air holes 11 are uniformly distributed on a first pitch circle of a first diameter. The first pitch circle is a circle using a center point of a first shaft hole 12 on the rotor core 1 as a center and using a distance from the center of the circle to a center point of the first air hole 11 as a radius. For details, refer to FIG. 5. As shown in FIG. 6, second air holes 21 in axisymmetric distribution and third air holes 22 in axisymmetric distribution are distributed on the first rotor end plate 2, where the second air holes 21 are uniformly distributed on a second pitch circle of a second diameter, and the third air holes 22 are distributed on a third pitch circle of a third diameter. The second pitch circle is a circle using a center point of a second shaft hole 23 on the first rotor end plate 2 as a center and using a distance from the center of the circle to a center point of the second air hole 21 as a radius, and the third pitch circle is a circle using the center point of the second shaft hole 23 on the first rotor end plate 2 as a center and using a distance from the center of the circle to a center point of the third air hole 22 as a radius. For details, refer to FIG. 7. Because a structure of the first rotor end plate 2 is the same as a structure of the second rotor end plate 3, the structure of the second rotor end plate is not described herein again.

It should be noted that a shape of the first air hole 11, a shape of the second air hole 21, and a shape of the third air hole 22 are not limited in this application. However, the second diameter corresponding to the second pitch circle is greater than the first diameter corresponding to the first pitch circle, and the first diameter corresponding to the first pitch circle is greater than the third diameter corresponding to the third pitch circle. In this way, positions of the first air hole 11, the second air hole 21, and the third air hole 22 are limited. To be specific, using the motor shaft 4 as a reference, the position of the second air hole 21 is offset outwardly from the first air hole 11, and using the motor shaft 4 as a reference, the position of the third air hole 22 is offset inwardly toward the first air hole 11. Therefore, a principle of designing sizes of the second air hole 21 and the third air hole 22 is such that the first air hole 11 can be partially blocked based on a magnitude relationship between the first diameter, the second diameter, and the third diameter.

In this embodiment of this application, the rotor core is coaxially fastened to the motor shaft, and the first rotor end plate and the second rotor end plate are respectively fastened to both ends of the rotor core, and are coaxially fastened to the motor shaft. The stepped air duct is formed by the second air holes and the third air holes on the first rotor end plate, the first air holes on the rotor core, and the second air holes and the third air holes on the second rotor end plate. Differential pressure is generated when the rotor assembly rotates, so that an air path can be formed in the duct, and therefore, self-circulation cooling for the rotor assembly is implemented, and a cooling effect is achieved. In addition, stepped air ducts with a plurality of steps in different directions are formed by two types of air holes disposed on the first rotor end plate and the second rotor end plate, so that when the rotor assembly rotates, air flows horizontally inside the rotor assembly, and the cooling effect is enhanced. In addition, the first rotor end plate and the second rotor end plate are fastened to the motor shaft and both ends of the rotor core at the same time, so that not only magnetic steel in the rotor core can be fastened, but also the first rotor end plate and the second rotor end plate are of simple structures, and therefore, manufacturing costs of the rotor end plates can be reduced.

In addition, larger weight of the entire rotor assembly leads to larger rotation inertia, a large loss exists during running of a motor, and it is difficult to significantly improve efficiency. In addition, because the weight of the rotor assembly is large, working stability of the motor is poor and loud noise exists during assembly and use of the motor. As important components of the motor, the rotor core and the rotor end plate use a hollow design. In addition, in addition to forming the stepped air duct and performing ventilation and cooling on the rotor assembly, the first air holes, the second air holes, and the third air holes have a weight reduction effect, that is, make the entire rotor assembly lightweight.

In an embodiment, when the first rotor end plate 2 and the second rotor end plate 3 are disposed on both ends of the rotor core 1, a second radial center line of the second air hole 21 on the first rotor end plate 2 coincides with a first radial center line of the first air hole 11, and a third radial center line of the third air hole 22 on the second rotor end plate 3 coincides with the first radial center line.

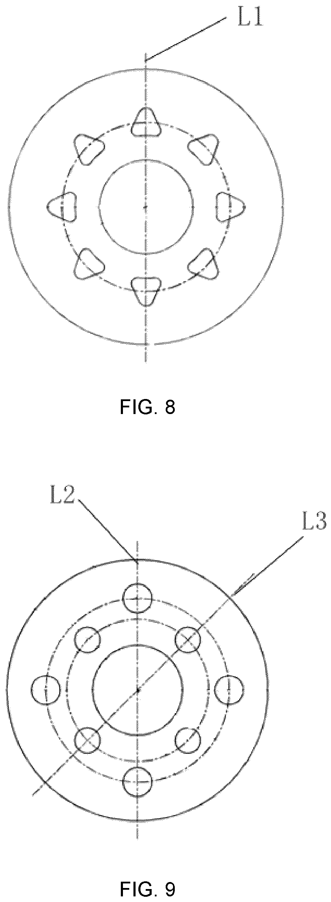

Refer to FIG. 8 and FIG. 9. FIG. 8 is a schematic diagram of the first radial center line according to an example embodiment of the present invention. FIG. 9 is a schematic diagram of the second radial center line and the third radial center line according to an example embodiment of this application. As shown in FIG. 8, a first radial center line L1 is a straight line in which a line connecting a center point of one of the first air holes 11 to the center point of the first shaft hole 12 is located. As shown in FIG. 9, a second radial center line L2 is a straight line in which a line connecting a center point of one of the second air holes 21 to the center point of the second shaft hole 23 is located, and a third radial center line L3 is a straight line in which a line connecting a center point of one of the third air holes 22 to the center point of the second shaft hole 23 is located.

In this embodiment of this application, the second radial center line of the second air hole 21 on the first rotor end plate 2 coincides with the first radial center line of the first air hole 11, and the third radial center line of the third air hole 22 on the second rotor end plate 3 coincides with the first radial center line, so that the second rotor end plate 3 is rotated clockwise or counterclockwise by a specific angle relative to the first rotor end plate 2, and the angle is the same as an angle formed relative to the center point of the second shaft hole 23 by center points of the first air hole 21 and the second air hole 22 that are adjacent to each other, to form the stepped air duct 5.

For example, there are four first air holes 21 and four second air holes 22, and the first air holes 21 and the second air holes 22 are uniformly and alternately distributed on the second pitch circle and the third pitch circle. In this case, the angle formed relative to the center point of the second shaft hole 23 by the center points of the first air hole 21 and the second air hole 22 that are adjacent to each other is 45°, and therefore, the second rotor end plate 3 is rotated clockwise or counterclockwise relative to the first rotor end plate 2 by 45°.

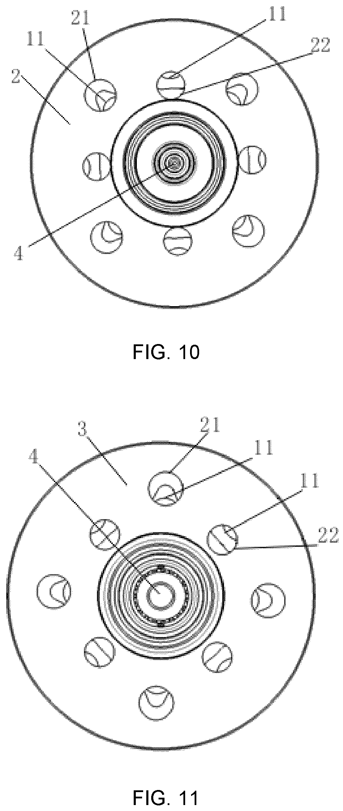

Refer to FIG. 10 and FIG. 11. In an embodiment, FIG. 10 is a left view of the rotor assembly according to an example embodiment of the present invention, and FIG. 11 is a right view of the rotor assembly according to an example embodiment of this application. As shown in FIG. 10, the second air hole 21 on the first rotor end plate 2 is offset outwardly from the motor shaft 4 to block the first air hole 11, and the third air hole 22 on the first rotor end plate 2 is offset inwardly toward the motor shaft 4 to block the first air hole 11. As shown in FIG. 11, the second air hole 21 on the second rotor end plate 3 is offset outwardly from the motor shaft 4 to partially block the first air hole, and the third air hole 22 on the second rotor end plate 3 is offset inwardly toward the motor shaft 4 to partially block the first air hole 11.

In this embodiment of this application, the stepped air duct 5 is formed by offsetting the first air hole 11 from the second air hole 21 and the third air hole 22 in different directions. Preferably, the second air hole 21 and the third air hole 22 each block half of the first air hole 11, to ensure equal air intake and exhaust volumes, and avoid a case that flowing of air speed is affected because when the air intake volume is not balanced with the air exhaust volume, some air forms eddy currents at air outlets on both ends or in an air duct of the rotor core 1.

In an embodiment, the stepped air duct 5 includes a first air duct and a second air duct, and an airflow direction of the first air duct is opposite to an airflow direction of the second air duct.

Continue to refer to FIG. 1. As shown in FIG. 1, from left to right, a step direction of the stepped duct 5 is from the motor shaft 4 to an outer side through the third air hole 22 on the second rotor end plate 3, the first air hole 11 on the rotor core 1, and the second air hole 21 on the first rotor end plate 2, and an air path from left to right can be formed in the stepped air duct 5.

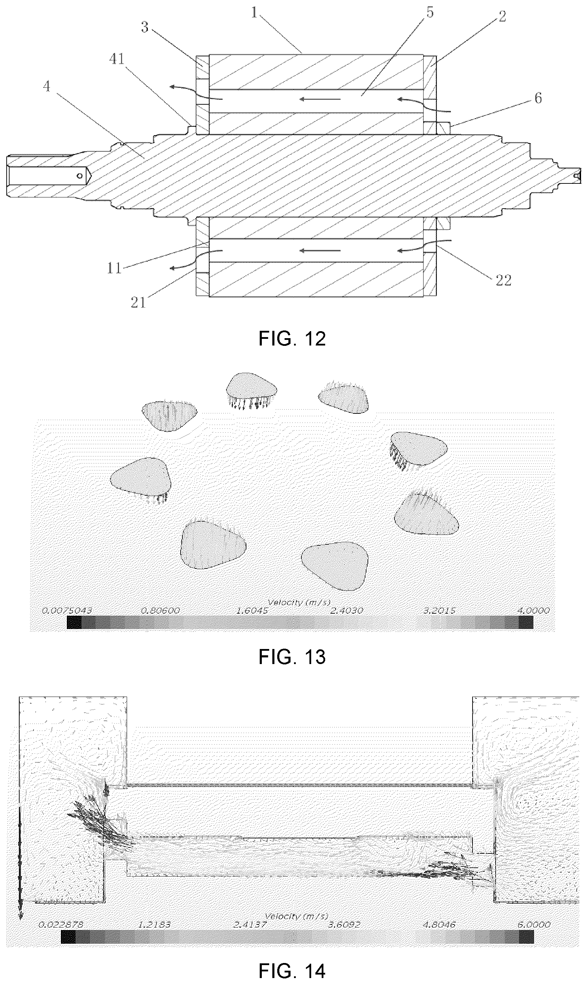

Refer to FIG. 12. FIG. 12 is a cross-sectional view of another rotor assembly according to an example embodiment of the present invention. As shown in FIG. 12, still from left to right, a step direction of the stepped duct 5 is from the motor shaft 4 to an inner side through the second air hole 21 on the second rotor end plate 3, the first air hole 11 on the rotor core 1, and the third air hole 22 on the first rotor end plate 2, and an air path from right to left can be formed in the stepped air duct 5.

In this embodiment of this application, stepped air ducts 5 in two directions are alternately and uniformly distributed, so that when the rotor assembly rotates, air flows horizontally inside the rotor assembly. In this way, a cooling effect can be enhanced.

Continue to refer to FIG. 12. In an embodiment, the rotor assembly further includes a fastener 6 configured to fasten the rotor core 1 and the rotor end plate to the motor shaft 4, and the fastener 6 neither intersects with nor overlaps the third air hole 22.

In this embodiment of this application, the fastener 6 may be a structural member that has a fastening function, such as a pressure ring or a locking nut, and can further fasten the rotor core 1 and the rotor end plate to the motor shaft 4, so that a whole structure of the rotor assembly is more secured and compact. In addition, a size of the fastener 6 does not block the third air hole 22, and does not affect a ventilation effect of the stepped air duct 5.

Considering a different structure of the motor shaft, in a possible embodiment, the fastener 6 may include a first fastener that fastens the rotor core 1 and the first rotor end plate 2 to the motor shaft 4, and a second fastener that fastens the rotor core 1 and the second rotor end plate 3 to the motor shaft 4, and the first fastener and the second fastener are in interference fit with the motor shaft 4.

Continue to refer to FIG. 12. In another possible embodiment, a left end of the motor shaft 4 is a spline end, and a right end thereof is a resolver end. A limiting member 41 that fastens the rotor core 1 and the second rotor end plate 3 on the motor shaft 4 is disposed on the spline end, the fastener 6 fastens, on the spline end, the rotor core 1 and the first rotor end plate 2 to the motor shaft 4, the fastener 6 is in interference fit with the motor shaft 4, and the limiting member 41 neither intersects with nor overlaps the third air hole 22.

It should be noted that interference fit enables, by using elasticity of a material, a hole to be expanded and deformed and therefore sleeved on a shaft, and when the hole is restored, clamping force is generated on the shaft, so that two parts are connected. A connection structure is simple, torque, axial force, or combined load of the two can be withstood, and a high load-bearing capability is possessed, and reliable working can also be performed under impact and vibration load. The first fastener and the second fastener are in interference fit with the motor shaft, and the fastener 6 is in interference fit with the motor shaft 4, to ensure more reliable fastening. In addition, a size of the limiting member 41 does not block the third air hole 22, and does not affect a ventilation effect of the stepped air duct 5.

In an embodiment, the first shaft hole 12 is in interference fit with the motor shaft 4, and the second shaft hole 23 is in transition fit with the motor shaft 4.

It should be noted that, based on a fastening characteristic between the first shaft hole 12 and the motor shaft 4 and a fastening characteristic between the second shaft hole 23 and the motor shaft 4, fastening is implemented by using connections of different principles. Interference fit means that a tolerance zone of a hole is located below a tolerance zone of a shaft, and fit of interference (including a minimum interference of zero) exits, that is, elastic pressure is generated between interfaces of parts after assembly by using a value of interference of the shaft and the hole, to obtain a secured connection. Transition fit means that a tolerance zone of a hole overlaps a tolerance zone of a shaft, and fit of clearance or interference may exist. Transition fit is mainly used for a relatively static fit that has precise positioning and requires removal, and a positioning connection that is easy to be removed and assembled.

Continue to refer to FIG. 12. In an embodiment, a fourth diameter of an outer contour of the rotor core 1 is equal to a fifth diameter of an outer contour of the rotor end plate.

In this embodiment of this application, to enable the first rotor end plate 2 and the second rotor end plate 3 to fasten the magnetic steel in the rotor core 1, a size of the first rotor end plate 2 and a size of the second rotor end plate 3 enable the first rotor end plate 2 and the second rotor end plate 3 to overlap and be fastened to both ends of the rotor core 1. Because two types of air holes are disposed on each of the first rotor end plate 1 and the second rotor end plate 3, a weight reduction effect is implemented, and weight of the entire rotor assembly is not affected. It should be noted that the fourth diameter of the outer contour of the rotor core 1 may be alternatively greater than the fifth diameter of the outer contour of the rotor end plate, but an effect of fastening the magnetic steel in the rotor core 1 by the first rotor end plate 2 and the second rotor end plate 3 cannot be affected.

In another embodiment of this application, imbalance may occur due to tolerance during rotation of the motor rotor. Because the first rotor end plate 2 and the second rotor end plate 3 are relatively large, in addition to the first air holes 21 and the second air holes 22, dynamic balancing holes can also be disposed on the first rotor end plate 2 and/or the second rotor end plate 3 based on a specific imbalance situation, to ensure dynamic balance in a rotation process of the rotor assembly.

Continue to refer to FIG. 10 and FIG. 11. In an embodiment, the second air holes 21 and the third air holes 23 are alternately and uniformly distributed on the first rotor end plate 2 and the second rotor end plate 3.

In this embodiment of this application, the second air holes 21 and the third air holes 23 are alternately and uniformly distributed, so that the first air ducts and the second air ducts in the stepped air duct 5 are alternately and uniformly distributed. Therefore, weight of the entire rotor assembly is uniformly distributed, and when the rotor assembly rotates, rotation of the entire rotor assembly can be balanced.

In conclusion, in a possible implementation, eight first air holes may be designed on the rotor core, and the eight first air holes are uniformly distributed on a first pitch circle with D1=Φ90; four second air holes with a diameter d1=Φ16 and four third air holes with a diameter d2=Φ14 may be designed on the first rotor end plate and the second rotor end plate, and the four second air holes and the four third air holes are alternately and uniformly distributed, where the second air holes are uniformly distributed on a second pitch circle with D2=Φ102, and the third air holes are uniformly distributed on a third pitch circle with D3=Φ79, to finally form eight stepped air ducts, where air flows in through the third air hole with the diameter d2=Φ1, and air flows out through the second air hole with the diameter d1=Φ16.

Through CFD (Computational Fluid Dynamics, computational fluid dynamics) analysis, the stepped air duct 5 can form an air path. Referring to FIG. 13, FIG. 13 is a simulation diagram of air entering and exiting a first air hole on one end of a rotor core according to an example embodiment of this application. As shown in FIG. 13, in the eight first air holes, air flows in through four first air holes, and air flows out through four first air holes, so that air alternately flows in and out through the eight first air holes. Air that flows in and air that flows out have specific air velocities, and a mass flow rate and a volume flow rate of an air volume may be shown in Table 1.

**Table 1: Mass flow rate and volume flow rate of an air volume**

| | Mass flow rate kg/s | Volume flow rate L/min |
|---|---|---|
| Constrained plane cross-section 1 | 0.000732380 | 37.11 |
| Constrained plane cross-section 2 | 0.000609181 | 30.87 |
| Constrained plane cross-section 3 | 0.000735221 | 37.25 |
| Constrained plane cross-section 4 | 0.000607866 | 30.80 |
| Constrained plane cross-section 5 | 0.000724037 | 36.69 |
| Constrained plane cross-section 6 | 0.000596980 | 30.25 |
| Constrained plane cross-section 7 | 0.000722578 | 36.61 |
| Constrained plane cross-section 8 | 0.000585441 | 29.66 |

In Table 1, the constrained plane cross-section may be understood as an end face of an air inlet and an air outlet of a stepped air duct. As shown in FIG. 10, any third air hole 22 is used as a start point, and numbering is sequentially performed clockwise, that is, corresponding to the constrained plane cross-sections 1 to 8 in the table. It should be noted that the third air hole 22 is an air inlet hole, and the second air hole 21 is an air outlet hole. It can be learned from Table 1 that the four third air holes 22 respectively correspond to the constrained plane cross-sections 1, 3, 5, and 7, and the four second air holes 21 respectively correspond to the constrained plane cross-sections 2, 4, 6, and 8. In this case, an air intake volume of the air inlet hole is greater than an air exhaust volume of the air outlet hole.

It should be understood that, that the second air hole 21 and the third air hole 22 each block half of the first air hole 11 is a preferred manner. In this case, both an entire mass flow rate and an entire volume flow rate of incoming air and outgoing air can be respectively close to each other, to ensure an equal air intake volume and air exhaust volume and prevent formation of an eddy current in the air duct from affecting flowing of an air velocity, thereby ensuring a cooling effect.

In addition, referring to FIG. 14, FIG. 14 is a simulation diagram of ventilation in a stepped air duct according to an example embodiment of the present invention. As shown in FIG. 14, an airflow direction is a direction from the third air hole to the first air hole and then to the second air hole, to implement flowing of air.

In conclusion, a rotor assembly is provided in the present invention. The rotor core is coaxially fastened to the motor shaft, and the first rotor end plate and the second rotor end plate are respectively fastened to both ends of the rotor core, and are coaxially fastened to the motor shaft. The stepped air duct is formed by the second air holes and the third air holes on the first rotor end plate, the first air holes on the rotor core, and the second air holes and the third air holes on the second rotor end plate. Differential pressure is generated when the rotor assembly rotates, so that an air path can be formed in the duct, and therefore, self-circulation cooling for the rotor assembly is implemented, and a cooling effect is achieved. In addition, stepped air ducts with a plurality of steps in different directions are formed by two types of air holes disposed on the first rotor end plate and the second rotor end plate, so that when the rotor assembly rotates, air flows from horizontally inside the rotor assembly, and the cooling effect is enhanced. In addition, the first rotor end plate and the second rotor end plate are fastened to the motor shaft and both ends of the rotor core at the same time, so that magnetic steel in the rotor core can be fastened, and the first rotor end plate and the second rotor end plate are of simple structures, and therefore, manufacturing costs of the rotor assembly can be reduced.

The present invention further provides a motor, including the foregoing rotor assembly.

In an embodiment, the motor is cooled in a water cooling manner, an oil cooling manner, or an air cooling manner.

It should be noted that, in addition to cooling the motor in the water cooling manner, the oil cooling manner, or the air cooling manner, auxiliary cooling may be performed on the rotor assembly. When the motor includes the rotor assembly provided in the foregoing embodiment, a cooling manner of the motor is not limited, that is, the motor can still be cooled in the water cooling manner, the oil cooling manner, or the air cooling manner.

It should be further noted that the motor provided in the foregoing embodiments and the rotor assembly provided in the foregoing embodiments belong to a same concept. Structures have been described in detail in the embodiment of the rotor assembly. Details are not described herein again.

The present invention further provides a new energy vehicle, including the foregoing rotor assembly or using the foregoing motor.

It should be noted that the new energy vehicle provided in the foregoing embodiments and the rotor assembly provided in the foregoing embodiments belong to a same concept. Structures have been described in detail in the embodiment of the rotor assembly. Details are not described herein again.

The foregoing embodiments merely illustrate principles and effects of the present invention, but are not intended to limit the present invention. Any person skilled in the art may modify or alter the foregoing embodiments without departing from the essence and scope of the present invention. Therefore, all equivalent modifications or alterations completed by a person of ordinary skill in the art without departing from the essence and technical ideas disclosed in the present invention should still be covered by the claims of the present invention.

## Claims

1. A rotor assembly, wherein the rotor assembly comprises a rotor core (1), a first rotor end plate (2), a second rotor end plate (3), and a motor shaft (4), the rotor core is coaxially fastened to the motor shaft, and the first rotor end plate and the second rotor end plate are respectively fastened to both ends of the rotor core, and are coaxially fastened to the motor shaft;
first air holes (11) in axisymmetric distribution are disposed on the rotor core, and the first air holes are distributed on a first pitch circle of a first diameter;
second air holes (21) in axisymmetric distribution and third air holes (31) in axisymmetric distribution are disposed on the first rotor end plate and the second rotor end plate, the second air holes are distributed on a second pitch circle of a second diameter, and the third air holes are distributed on a third pitch circle of a third diameter; and
the second diameter is greater than the first diameter, the first diameter is greater than the third diameter, and stepped air ducts in axisymmetric distribution are formed by the first air holes, the second air holes, and the third air holes.

2. The rotor assembly according to claim 1, wherein a second radial center line of the second air holes on the first rotor end plate coincides with a first radial center line of the first air holes, and a third radial center line of the third air holes on the second rotor end plate coincides with the first radial center line.

3. The rotor assembly according to claim 2, wherein the second air hole on the first rotor end plate is offset outwardly from the motor shaft to block the first air hole, the third air hole on the first rotor end plate is offset inwardly toward the motor shaft to block the first air hole, the second air hole on the second rotor end plate is offset outwardly from the motor shaft to partially block the first air hole, and the third air hole on the second rotor end plate is offset inwardly toward the motor shaft to partially block the first air hole.

4. The rotor assembly according to claim 1, wherein the stepped air duct comprises a first air duct and a second air duct, and an airflow direction of the first air duct is opposite to an airflow direction of the second air duct.

5. The rotor assembly according to claim 1, wherein the rotor assembly further comprises a fastener configured to fasten the rotor core and the rotor end plate to the motor shaft, and the fastener neither intersects with nor overlaps the third air hole.

6. The rotor assembly according to claim 5, wherein the fastener comprises a first fastener configured to fasten the rotor core and the first rotor end plate to the motor shaft, and a second fastener configured to fasten the rotor core and the second rotor end plate to the motor shaft, and the first fastener and the second fastener are in interference fit with the motor shaft.

7. The rotor assembly according to claim 5, wherein a first end of the motor shaft is a spline end and a second end of the motor shaft is a resolver end, a limiting member that fastens the rotor core and the second rotor end plate to the motor shaft is disposed on the spline end, the fastener is configured to fasten, on the spline end, the rotor core and the first rotor end plate to the motor shaft, the fastener is in interference fit with the motor shaft, and the limiting member neither intersects with nor overlaps the third air hole.

8. The rotor assembly according to claim 1, wherein a first shaft hole is further disposed on the rotor core, second shaft holes are further disposed on the first rotor end plate and the second rotor end plate, the rotor core is fastened to the motor shaft through the first shaft hole, and the first rotor end plate and the second rotor end plate are coaxially fastened to both ends of the rotor core through the second shaft holes and the motor shaft, respectively.

9. The rotor assembly according to claim 8, wherein the first shaft hole is in interference fit with the motor shaft, and the second shaft hole is in transition fit with the motor shaft.

10. The rotor assembly according to claim 1, wherein a fourth diameter of an outer contour of the rotor core is equal to a fifth diameter of an outer contour of the rotor end plate.

11. The rotor assembly according to claim 1, wherein the second air holes and the third air holes are alternately and uniformly distributed on the first rotor end plate and the second rotor end plate.

12. A motor, comprising the rotor assembly according to any one of claims 1 to 11.

13. The motor according to claim 12, wherein the motor is cooled in a water cooling manner, an oil cooling manner, or an air cooling manner.

14. A new energy vehicle, comprising the rotor assembly according to any one of claims 1 to 11, or the motor according to any one of claims 12 and 13.
